# EUROPEAN PATENT SPECIFICATION

(11) **EP 0 338 688 B1**
(45) Date of publication and mention of the grant of the patent: **04.08.1993**
(21) Application number: 89303120.3
(22) Date of filing: 30.03.1989
(51) Int. Cl.: G01P 15/13, G01P 15/125

(54) **Accelerometer**
Beschleunigungsmesser
Accéléromètre

(30) Priority: 01.04.1988 JP 78034/88
(43) Date of publication of application: 25.10.1989
(73) Proprietor: HITACHI, LTD., Chiyoda-ku, Tokyo 100 (JP)
(72) Inventor: Suzuki, Seikou, Hitachioota-shi Ibaraki 313 (JP); Tsuchitani, Shigeki, Mito-shi Ibaraki 311-41 (JP); Shimada, Satoshi, Hitachi-shi Ibaraki 319-12 (JP); Miki, Masayuki, Katsuta-shi Ibaraki 312 (JP); Kobori, Shigeyuki, Hitachi-shi Ibaraki 319-12 (JP); Matsumoto, Masahiro, Hitachi-shi Ibaraki 316 (JP)
(74) Representative: Molyneaux, Martyn William

(56) References cited:
- EP-A- 198 724
- EP-A- 301 816
- GB-A- 2 096 326
- US-A- 4 336 718

## Description

### Background of the Invention

This invention relates to an accelerometer and more particularly to an accelerometer which will be suitable for a car body control system of a vehicle. An accelerometer capable of accurately detecting the range of 0 ∼ ±1(G) and 0 ∼ 10(Hz) is required with 1(G) being equal to 9.8(m/s²).

Many systems have been described for such an accelerometer. Known systems include a piezoelectric system using a piezoelectric effect of a piezoelectric material, a strain gauge system using a piezoresistance effect, a servo system having a force feedback system, a magnetic system utilizing a differential transformer, an optical system utilizing a photo-interrupter, a capacitance system utilizing miniaturization etching technique of silicon, and so forth. Among them, it is believed possible to drive the capacitance type sensor utilizing a miniaturization etching technique of silicon by an electrostatic servo.

The system which drives the capacitance type sensor utilizing the conventional miniaturization etching technique of silicon by the electrostatic servo involves the drawback that a compensation circuit for linearizing non-linearity is needed because non-linearity of the electrostatic servo mechanism is great, the output characteristics cannot be adjusted easily and the production yield is low.

EP-A-0198724, TRANSDUCERS '87, The 4th International Conference Solid-State Sensors and Actuators, Pages 395 to 398 and U.S. Patent No. 4,483,194 are cited as examples of such a device. EP-A-0198724 also shows a semiconductor accelerometer having means for feeding back electrostatic force between movable and fixed electrodes for maintaining the movable electrode in fixed relationship with respect the fixed electrodes.

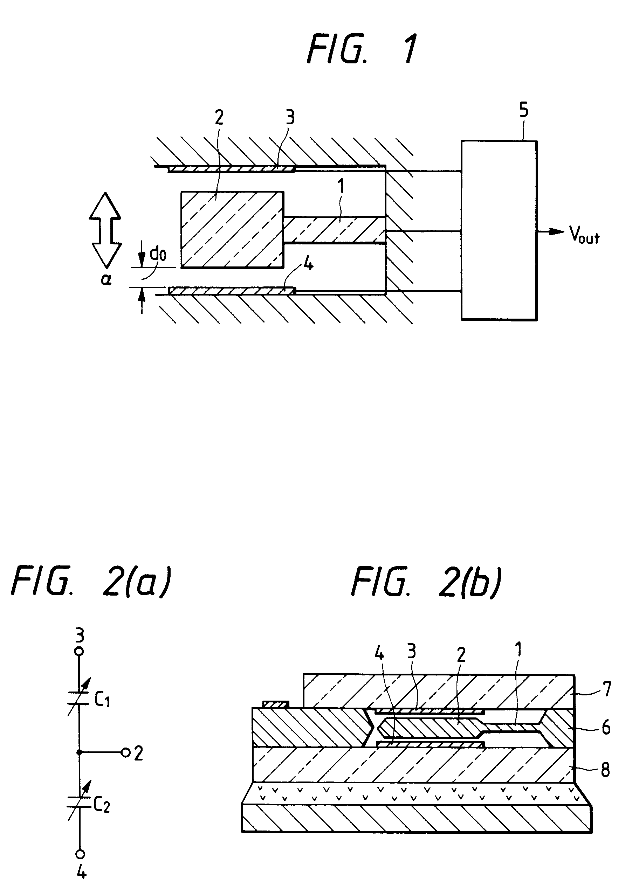

The typical structure of the electrodes 2 to 4 and cantilever 1 which is generally known is shown in Figure 2(b), and an electrical circuit thereof is shown in Figure 2(a).

A movable electrode 2 serving also as a weight is formed at the tip of a cantilever 1 by etching a silicon plate 6 from both of its surfaces. Fixed electrodes 3, 4 are made of a metal such as aluminum and are formed by vapor deposition onto glass plates 7, 8, respectively.

Assuming that capacitances between the movable electrode 2 and the fixed electrodes 3 and 4 are C₁, C₂, respectively, the values of C₁, C₂ are proportional to the displacement of the movable electrode 2, that is, the acceleration α(G). The most typical measurement method of the conventional capacitance type accelerometer detects the acceleration α(G) from the absolute values of the capacitances C₁, C₂ or their difference ΔC. As will be described next, this measurement method involves the problem that the production yield drops because the output characteristics fluctuate greatly due to the variance of the initial gap dimension between the movable electrode 2 and the fixed electrodes 3, 4 that occurs during production.

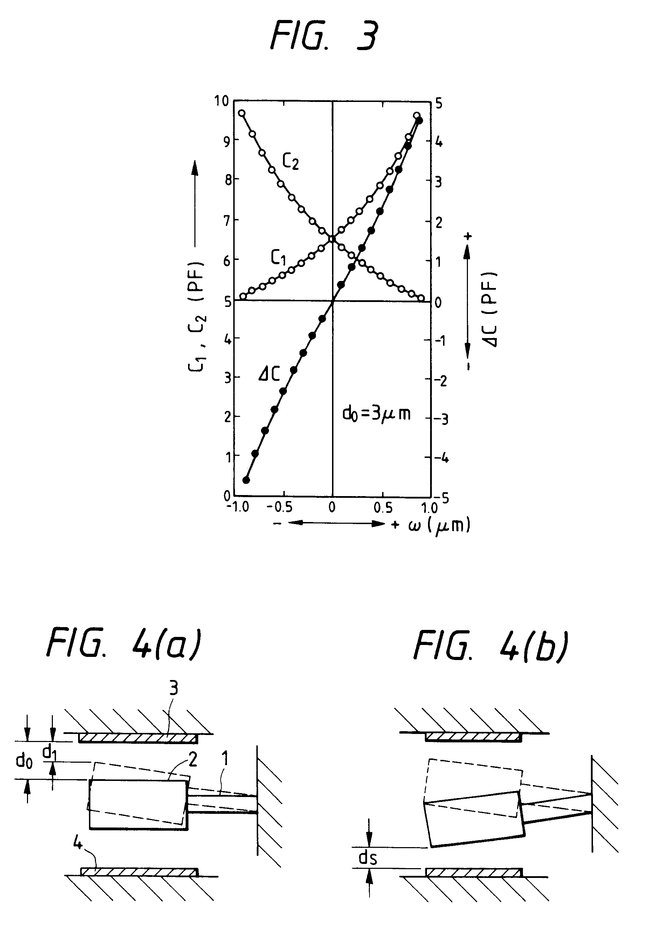

Fig. 3 shows an example of the relation between the acceleration and the capacitance when the movable electrode 2 undergoes displacement in accordance with the acceleration α(G). The diagram shows the case where the initial gap dₒ between the movable electrode 2 and the fixed electrodes 3, 4 is 3 µm. As shown in the drawing, the capacitances C₁, C₂ and their difference ΔC have large non-linearity to the displacement ω of the movable electrode (which is proportional to the acceleration α) and it is difficult to detect highly accurately the acceleration α. Incidentally, the capacitance C between the electrodes is given by the following formula as is well known: 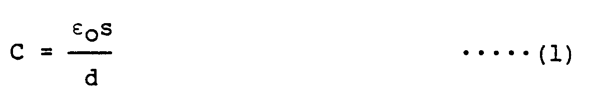
where
- εₒ:: vacuum dielectric constant,
- s:: area of electrode,
- d:: gap between electrodes.

Since the capacitance C is inversely proportional to the gap dimension d, non-linearity becomes great as shown in Fig. 3. As can be understood from the formula (1) and Figure 3, if the initial gap dₒ between the movable electrode 2 and the fixed electrodes 3, 4 is greater than 3µm when the production is complete, sensitivity and non-linearity of the capacitance C₁, C₂ and their difference ΔC with respect to the change of the acceleration α fluctuate greatly. Therefore, when the acceleration α is detected from the capacitance change, the variance of the initial gap dimension at the time of production must be an extremely small value. In practice, however, the conventional technique has the drawback that the initial gap dimension at the time of production is not constant.

GB-A-2096326 discloses a force-balance pendulum accelerometer in which a pendulum in the form of a disc having a pivot axis which intersects the disc is mounted on a pair of wires which suspend the disc at points on its periphery. The centre of gravity of the disc is spaced from the pivot axis and two force-balance plates are positioned on each side of the disc and two sensor plates are also positioned on each side of the disc, whereby a servo circuit is connected to the force-balance plates and provides a pulse-shaped signal having a fixed voltage for a time which is force-related.

### Summary of the Invention

It is an object of the present invention to provide a capacitance type accelerometer which does not need a non-linearity compensation circuit and has a high production yield.

According to this invention there is provided an accelerometer having a movable electrode which is movable in dependence upon acceleration, a fixed electrode opposite to the movable electrode and separated therefrom by a gap, a circuit which measures a capacitance between the movable and fixed electrode which depends on the gap and generates voltage signal having a voltage dependent upon the capacitance, and means for obtaining a voltage difference between the voltage and a predetermined voltage, feedback means for feeding back an electrostatic force between the fixed and movable electrode so that the gap width is held predeterminedly constant, characterised in that said movable electrode is supported by a cantilever, and further characterised by a pulse width modulation means for generating pulses, wherein a pulse width of the pulses is modulated according to the voltage difference, said feedback means feeding back the pulses generated by the pulse width modulation means between the movable electrode and the fixed electrode and wherein said electrostatic force is proportional to the pulse width of the pulses generated from the pulse modulation means, and an output means for generating an output voltage which is proportional to the pulse width as a signal indicative of the acceleration based on said voltage difference.

In a feature of this invention is provided an accelerometer wherein a second fixed electrode is spaced from said first electrode and said movable electrode is disposed therebetween so that respective capacitances are produced between the fixed electrodes and the movable electrode, wherein the pulse width modulation means produces modulation in dependence upon deviation of the gaps between the movable and fixed electrodes, and the output of the pulse width modulation means is fed back between the movable electrode and one or both the fixed electrodes.

The object described above can be accomplished by disposing at least one fixed electrode in such a manner as to oppose a movable electrode formed at the tip of a cantilever by miniature etching technique of silicon, letting electrostatic force act between both electrodes so that the capacitance between the movable electrode and the fixed electrode(s) reaches a predetermined value (that is, in such a manner as to restrict displacement of the movable electrode) and controlling the electrostatic force between both electrodes by a pulse width modulation system, and preferably by providing the electrostatic force with a bias electrostatic force component so as to cause substantial linearization without using a linearization circuit, and taking out an output signal proportional to acceleration from this electrostatic force.

In this invention, firstly when electrostatic force (whose magnitude is proportional to the square of the voltage applied between both electrodes) is subjected to feedback control by a pulse width modulation system, this pulse width is accurately proportional primarily to the acceleration to be detected. Secondly, a relatively large bias electrostatic force is applied between the movable electrode and one of the fixed electrodes and the electrostatic force applied between the movable electrode and the other of the fixed electrodes is subjected to feedback control. In this case, the degree of the change of the voltage applied between both electrodes to generate the latter electrostatic force is substantially proportional primarily to the acceleration to be detected.

In the invention described above, acceleration can be detected with high linearity and high level of accuracy from the electrostatic force which is subjected to feedback control in such a manner as to restrict the position of the movable electrode, without using a linearization circuit.

As stated above sensitivity and zero point of accelerometer in general have variances within certain ranges due to various factors at the time of production. Therefore, they must be somehow adjusted. The accelerometer in accordance with the present invention can be adjusted easily because it can detect the acceleration linearly. As a result, the present invention can provide a capacitance type acceleration sensor with a high production yield.

### Brief Description of the Drawings

Fig. 1 shows the basic structure of an accelerometer is accordance with the present invention;
Fig. 2(b) shows a typical structure of a conventional accelerometer, and an electrical circuit thereof is shown in Fig. 2(a).
Fig. 3 is a diagram showing the relation between the displacement of a movable electrode and a capacitance in the conventional accelerometer;
Fig. 4(a) and Fig. 4(b) show variance state of initial gap dimension between electrodes;
Fig. 5 is a detailed structural view of the detection portion of the accelerometer in accordance with the present invention;
Fig. 6 is a plan view of the detection portion in Fig. 5;
Fig. 7 shows an embodiment of an electrostatic servo control method in accordance with the present invention;
Fig. 8 is a detailed explanatory view of a linear electrostatic force conversion portion in Fig. 7;
Fig. 9 shows another embodiment of the electrostatic servo control method in accordance with the present invention;
Fig. 10 shows a structural example of the detection circuit of the accelerometer in accordance with the present invention;
Figs. 11 and 12 show the output characteristics of the accelerometer in accordance with the present invention; and

### Detailed Description of the Preferred Embodiments

Hereinafter, an embodiment of the present invention will be explained with reference to Fig. 1. The detection portion of the accelerometer in accordance with the present invention consists of a movable electrode 2 formed at the tip of a silicon cantilever 1 and fixed electrodes 3 and 4 arranged to oppose the movable electrode 2. The movable electrode 2 undergoes vertical displacement between the fixed electrodes 3 and 4 depending on the magnitude and direction of the acceleration α(G) to be detected. The fixed electrodes 3, 4 and the movable electrode 2 are coupled electrically with an electrostatic servo circuit 5. Here, the movable electrode 2 is coupled through the cantilever 1. Electrostatic force is applied in a feedback control arrangement between the movable electrode 2 and the fixed electrode 3 or 4 so that the dimension of the gap between the movable electrode 2 and one of the fixed electrodes (the electrode 4 in the case of the drawing) attains a predetermined value dₒ and an output signal Vₒᵤₜ proportional to the acceleration α can be taken out from this electrostatic force. The electrostatic servo circuit 5 constitutes the gist of the present invention with the structure of the detection portion, though its detail will be described later.

Figs. 4(a) and 4(b) show an embodiment of the present invention which shows how to correct the variance state of the initial gap dimension between the electrodes. Solid line in Fig. 4(a) represents the state where the movable electrode 2 is at a desired position when the acceleration α acting on the accelerometer is zero. The gap dimension between the movable electrode 2 and the fixed electrode 3 in this case is assumed to be dₒ. As show in Fig. 2, however, the movable electrode 2 is not always positioned at the intermediate position between the fixed electrodes 3 and 4 due to the thermal stress of the bonded portion when the glass plates 7, 8 are bonded to the silicon plate 6. For example, it is closer to the fixed electrode 3 as represented by dotted line in Fig. 4(a). For, non-uniformity of the thermal stress at the bonded portion transfers to the fixed end of the cantilever 1 and the cantilever 1 undergoes displacement either upward or downward with its own fixed end being the support point. Assuming that the dimension of the gap between the movable electrode 2 and the fixed electrode 3 is d₁, this dimension d₁ takes various values at the time of production and the conventional typical sensing method exhibits a large variance of output characteristics and invites the drop of production yield.

Accordingly, in the present invention, the movable electrode 2 is caused to undergo displacement by the electrostatic force applied between the movable electrode 2 and the fixed electrodes 3, 4 so that the movable electrode 2 comes to the intermediate position between the fixed electrodes 3 and 4 (the dimension of gap dₒ) whatever value the dimension of gap d₁ between the movable electrode 2 and the fixed electrode 3 at the time of production may have, as shown in Fig. 4(a), and the dimension of gap is held at a desired value (at dₒ in the drawing). Then, the output signal of the accelerometer is taken out from the electrostatic force applied between the electrodes.

The position of the movable electrode 2 when the acceleration α is zero need not always be kept at the intermediate position between the fixed electrodes 3 and 4 and the dimension of gap between the movable electrode and the fixed electrode may be kept at dₛ which is closer to one of the electrodes, as shown in Fig. 4(b).

As a result, the gap dimension between the movable electrode and the fixed electrodes can be kept at dₒ or dₛ by the electrostatic force even though the gap dimension between the electrodes may fluctuate when producing a large number of accelerometers. Accordingly, the variation in the output characteristics of mass produced accelerometers, that has been the problem with the typical conventional sensing method, can now be reduced.

Moreover, as will be described later, the D.C. voltage applied between the electrodes and the resulting electrostatic force have a non-linear relation.

Accordingly, the gist of the present invention resides in that when the output signal corresponding to the acceleration is derived from the electrostatic force between the movable and fixed electrodes while maintaining the movable electrode at a desired position by the electrostatic force, linearity is provided. As a result, the production yield is improved and a high precision accelerometer can be provided at a reduced cost of production.

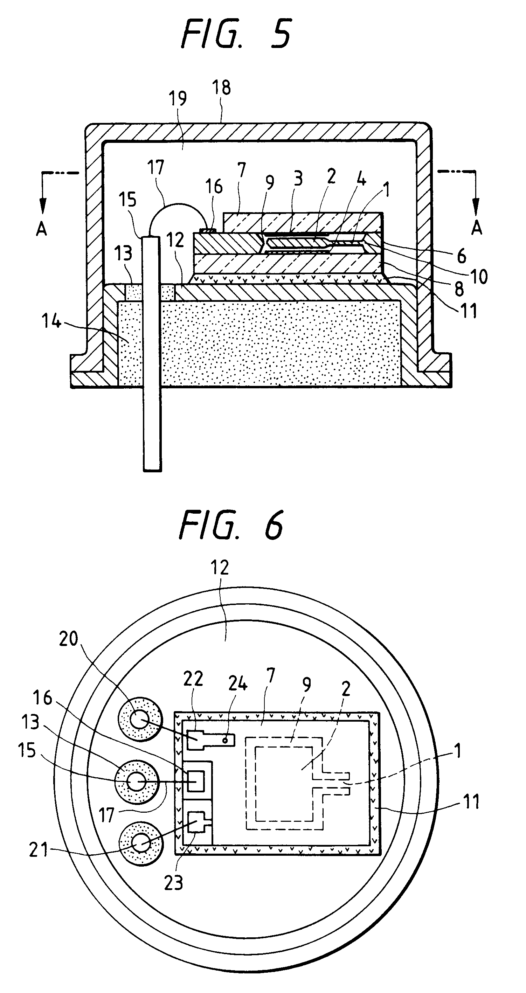

Fig. 5 shows the detailed structure of the detection portion of the accelerometer in accordance with the present invention. The movable electrode 2 serving also as a weight is formed at the tip of the cantilever 1 by etching the silicon plate 6 from both of its surfaces. Since the periphery of the movable electrode 2 is separated from the silicon plate 6 by through-hole groove 9, the movable electrode 2 responds to the acceleration to be detected and moved vertically between the fixed electrodes 3 and 4 formed on the glass plates 7 and 8 by vapor deposition or the like against the fixed end 10 of the cantilever 1 as a support point.

A sensor chip formed by bonding the glass plate 7, the silicon plate 6 and the glass plate 8 by anodic bonding or other method is fixed onto a stem 12 by use of an organic adhesive 11 (e.g. silicone rubber) having a small vertical elastic modulus (or soft adhesive). A hole 13 is bored on this metallic stem 12 and a lead 15 is hermetically sealed and fitted by a glass material 14. Since the thermal expansion coefficients of the stem 12 and glass plate 8 are mutually different, a soft silicon rubber or the like is suitable as the adhesive 11 lest the bond strain at this portion is transferred to the sensor chip above it.

Next, lead wires 17 are wire-bonded to a lead extension electrode 16 and to the lead 15 and connected electrically thereto. The electrostatic servo circuit 5 and detection portion described with reference to Fig. 1 are connected electrically through the leads 15. A cap 18 is fitted to the stem 12 in a vacuum or nitrogen atmosphere and the inside of a chamber 19 is sealed hermetically.

Fig. 6 is a view taken along A - A of the detector portion assemble, that is, a plan view. The fixed electrode 3, the movable electrode 2 and the fixed electrode 4 are wired to the electrostatic servo circuit 5 through the lead extension electrodes 22, 16, 23 and the leads 20, 15, 21, respectively. Incidentally, the hole 24 is for electrically connecting the fixed electrode 3 formed on the lower surface of the glass plate 7 to the lead extension electrode 22 and wiring is made by applying plating into the hole 24, or the like.

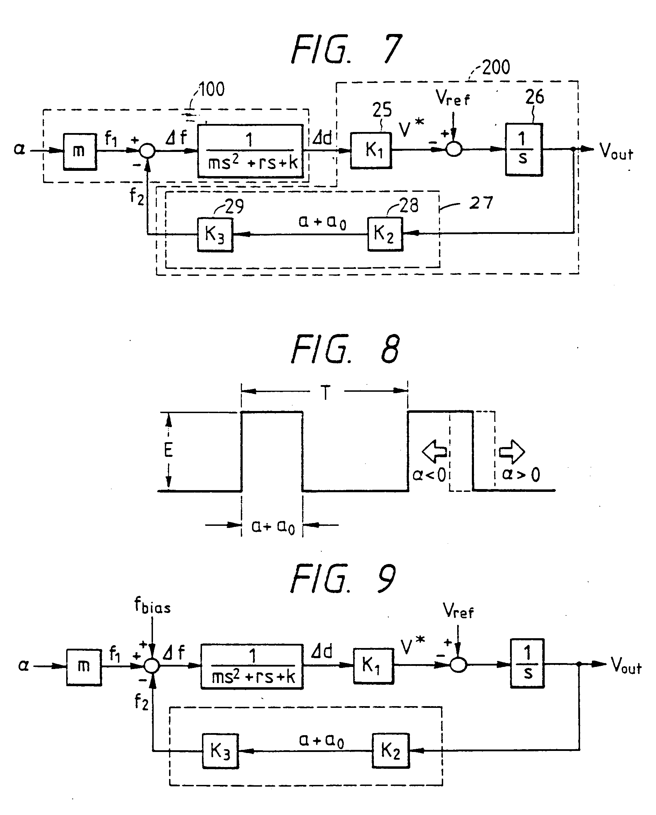

Fig. 7 shows the electrostatic servo control method in accordance with the present invention. When the movable electrode 2 having a mass m receives the acceleration α(G) (1G = 9.8 m/s²), it moves in response to the force f₁ represented by the formula (2) below with the fixed end 10 of the cantilever 1 being the center:

$\text{f₁ = mα (2)}$

Assuming that the feedback electrostatic force acting on the movable electrode 2 is f₂, then the movable electrode 2 undergoes displacement by Δd due to the force Δf:

$\text{Δf = f₁ - f₂ (3)}$ 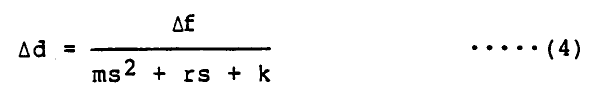
Here, s is a Laplace constant, r is a resistance coefficient and k is a spring constant of the cantilever 1. The coefficient r is determined by the density of a fluid around the movable electrode 2, the dimension of the through-hole groove 9 and the gap between the electrodes.

Since the dimension of gap d between the movable electrode and the fixed electrode changes due to the displacement of the movable electrode 2, Δd can be detected from the electrical capacitance between the movable electrode and the fixed electrode.

In Figure 7, block 100 corresponds to the electrodes 2 to 4 and the cantilever 1 in Fig. 1 and block 200 corresponds to the electrostatic servo circuit 5 in Fig. 1.

The displacement Δd of the movable electrode 2 is converted to a voltage V* by a switched capacitor circuit 25 having a gain K₁ and is compared with a reference voltage V_{ref}. As will be described later, the switched capacitor circuit 25 applies a rectangular voltage wave train between the electrodes and the dimension d of gap can be detected directly from the capacitance between the electrodes. The electrostatic servo circuit in the drawing is subjected to feedback controls so as to satisfy the formula

${\text{V}}_{\text{ref}} \text{- V* = 0 (5)}$

and the gap between the movable electrode 2 and one of the fixed electrodes is kept at a constant value. As shown in Fig. 4(a) and Fig. 4(b), the dimension of gap dₒ or dₛ between the movable electrode 2 and the fixed electrode 4 can be kept always at a desired value irrespective of the magnitude and direction of the acceleration α. At the same time, the problems resulting from the variance of the gap dimension between the movable electrode and the fixed electrode at the time of production can be overcome and a high performance accelerometer can be provided at a low cost of production.

The electrostatic servo mechanism is subjected to the feedback control by the voltage applied between the movable electrode and the fixed electrode in such a manner as to satisfy the formula (5) and the output signal Vₒᵤₜ which is accurately proportional primarily to the acceleration α to be detected is taken out through an integrator 26.

The electrostatic force f₂ is feedback-controlled linearly by a linear electrostatic force conversion portion 27 with respect to the acceleration α to be detected on the basis of the output signal Vₒᵤₜ. As will be explained in detail with reference to the next drawing, the electrostatic force f₂ that operates in such a manner as to attract the movable electrode 2 to the fixed electrode 4 is controlled essentially linearly without the need of the linearization circuit.

The linear electrostatic force conversion portion 27 consists of a pulse width modulator 28 having a gain K₂ and an electrostatic force conversion portion 29 having a gain K₃.

Next, the detail of the linear electrostatic force conversion portion 27 will be described with reference to Fig. 8.

The output signal Vₒᵤₜ is modulated to a pulse train having a period T by the pulse width modulator 28 and its pulse width becomes a + aₒ. Here, a is a variable portion of the pulse width which is varied in proportional to the acceleration α, and aₒ is a base portion of the pulse width when the acceleration α is zero. The period T of the pulse train is decided so that the frequency of the pulse train becomes sufficiently greater than the inherent frequency of the detection portion consisting of the cantilever 1 and the movable electrode 2. The inherent frequency of the detection portion produced tentatively is 1.5(KHz) and in this case, the period T is set to 50(µs). Incidentally, the voltage peak value E of the pulse train is always constant.

The proportional gain K₃ of the electrostatic force conversion portion 29 is determined physically and is given as follows when the movable electrode 2 is kept at the ground level and the pulse train described above is applied to the fixed electrode 4: 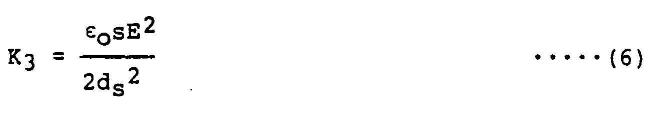
The electrostatic force f₂ attracting the movable electrode 2 towards the fixed electrode 4 is given as follows: 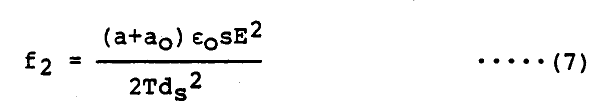
What is important in the formula (7) above is that the voltage peak value E of the pulse train applied between the movable electrode 2 and the fixed electrode 4, its period T and the gap dimension dₛ between the electrodes are constant and the electrostatic force f₂ is primarily proportional to (a + aₒ) obtained by the pulse width modulation of the output signal Vₒᵤₜ and is subjected to feedback control to a completely linear from without the need of the lenearization circuit.

Incidentally, the base portion aₒ of the pulse width generates the electrostatic force for setting the gap dimension between the movable electrode 2 and the fixed electrode 4 to dₛ under the state where the acceleration is zero. In other words, the smaller the gap dimension d between the movable electrode 2 and the fixed electrode 4 at the time of production, the smaller becomes aₒ and the greater the d value, the greater becomes the aₒ value.

The variable portion a of the pulse width changes the electrostatic force f₂ in proportion to the acceleration α to be detected and is in agreement with the polarity of the acceleration α as expressed by the following formula:
when

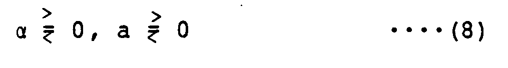

In other words, if the acceleration in the direction from the side of the fixed electrode 4 towards the side of the fixed electrode 3 is defined as α > 0, the width of the pulse train increases when α > 0 as represented by dotted line in the drawing and decreases when α < 0. The proportion of the increase or decrease of the pulse train changes linearly with respect to the acceleration α (accurately proportional primarily). As a result, the following formula of output signal Vₒᵤₜ is established:

${\text{V}}_{\text{out}} \text{∝ Kmα (9)}$

where K is a proportional constant.

As expressed by the formula (9), the acceleration α can be detected with high linearity without being affected by the variance of the gap dimension between the movable electrode 2 and the fixed electrode 4 occurring at the time of production and by the influence of the spring constant k of the cantilever 1.

Furthermore, the output signal Vₒᵤₜ may be taken out from the output side of the pulse width modulator 28.

Incidentally, the switched capacitor circuit 25 detects the capacitance between the movable electrode 2 and the fixed electrode 4 by utilizing the pulse train for generating the electrostatic force that is applied between both electrodes 2 and 4. Though a detailed example of the detection circuit is described later, the capacitance Cₛ can be detected from the following formula by charging the charge Q in the capacitance Cₛ formed between both electrodes at the instant when the voltage E having a constant peak value is applied between both electrodes, and by transferring this charge Q to a known capacitance C_{ref} at the instant when the voltage E becomes zero:

${\text{Q = C}}_{\text{s}} \text{E (10)}$
${\text{Q = C}}_{\text{ref}} \text{·E* (11)}$

From the formulas (10) and (11),

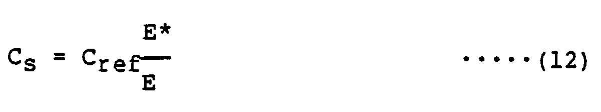

Therefore, the capacitance Cₛ between both electrodes can be detected by measuring the voltage E* occurring in the known capacitance C_{ref}. If the capacitance Cₛ is defined as follows, 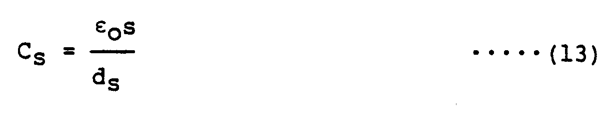
the electrostatic servo mechanism show in Fig. 7 operates as expressed by the formula (5) and the capacitance between both electrodes is controlled to Cₛ. Furthermore, the gap between the movable electrode 2 and the fixed electrode 4 is kept at a desired predetermined value dₛ without depending on the magnitude and direction of the acceleration α to be detected.

In the system shown in Figs 7 and 8, the detection of the capacitance and the generation of the electrostatic force are made between the same electrodes and there is only one fixed electrode opposing the movable electrode 2. Therefore, the structure of the detection portion is extremely simple.

When the gap dimension d between the movable electrode 2 and the fixed electrode 4 is smaller than the desired set value dₛ, detection of the acceleration α becomes difficult in accordance with the method shown in Fig. 4(b).

The detection system in this case is shown in Fig. 9. In this drawing, D.C. electrostatic force f_{bias} is added bias-wise to the method of Fig. 7. The movable electrode 2 can be moved in the direction of the fixed electrode 3 by applying f_{bias} between the fixed electrode 3 and the movable electrode 2. As a result, detection of the acceleration α can be made even when the gap between the movable electrode 2 and the fixed electrode 4 at the time of production is smaller than dₛ. As shown in Fig. 4(a), the acceleration α can also be detected by holding the position of the movable electrode 2 at the intermediate position between the fixed electrode 3 and 4 by the electrostatic force in the feedback control arrangement as shown in Fig. 4(a).

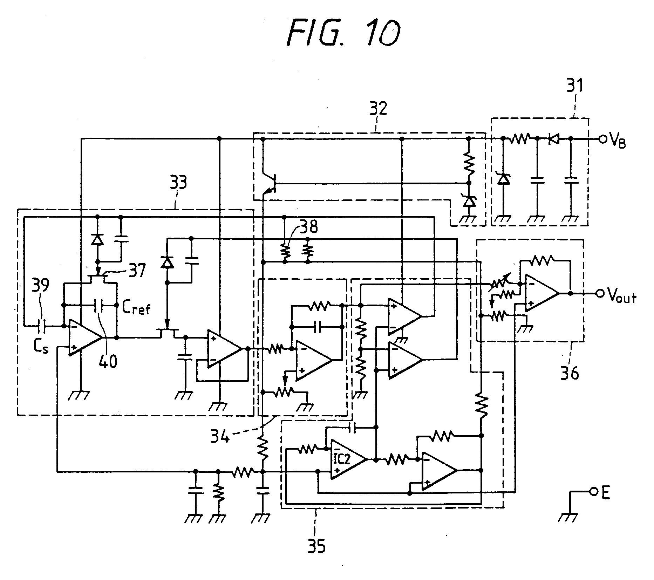

Next, Fig. 10 shows a structural example of the detection circuit of the accelerometer in accordance with the present invention. The drawing shows the circuit which detects the acceleration α by use of the electrostatic servo control method shown in Fig. 7 and the circuit added f_{bias} shown in Fig. 9 is not comprised in the circuit shown in Fig. 10. This circuit consists of a power source protection circuit portion 31, a constant voltage circuit portion 32, a switched capacitor circuit portion 33, an integrator 34, a pulse width modulator 35 and an output regulation circuit portion 36. In the drawing, V_{B} represents a voltage of a battery of a vehicle.

While the switch 37 is ON, a current is supplied from a resistor 38 between the movable electrode 2 and one of the fixed electrode 4 at the detection portion of the accelerometer to charge the charge in the capacitance Cₛ 39. Next, at the instant when the supply of the current is stopped, the switch 37 is turned OFF and the charge of the capacitance Cₛ 39 is transferred to the known capacitance C_{ref} 40. As a result, the value of the capacitance Cₛ between the movable electrode 2 and the fixed electrode 4 is detected in accordance with the formula (12).

The electrostatic force applied between the movable electrode 2 and the fixed electrode 4 through the pulse width modulator 35 is feedback-controlled so that the capacitance Cₛ attains a predetermined constant value. The output signal Vₒᵤₜ accurately proportional to the acceleration is taken out from this pulse width through the output regulation circuit portion 36.

Furthermore, the embodiments of the present invention stated above showed the case which measure only one gap between the movable electrode and one of the two fixed electrode. But, as shown in Fig. 1, both of the gaps between the movable electrode 2 and the fixed electrodes 3 and 4 may be detected. In this case, the pulse width modulator 35 is modulated according to a deviation of the two gaps, and the output of the pulse width modulator 35 is fed back between the movable electrode and at least one of the two fixed electrodes.

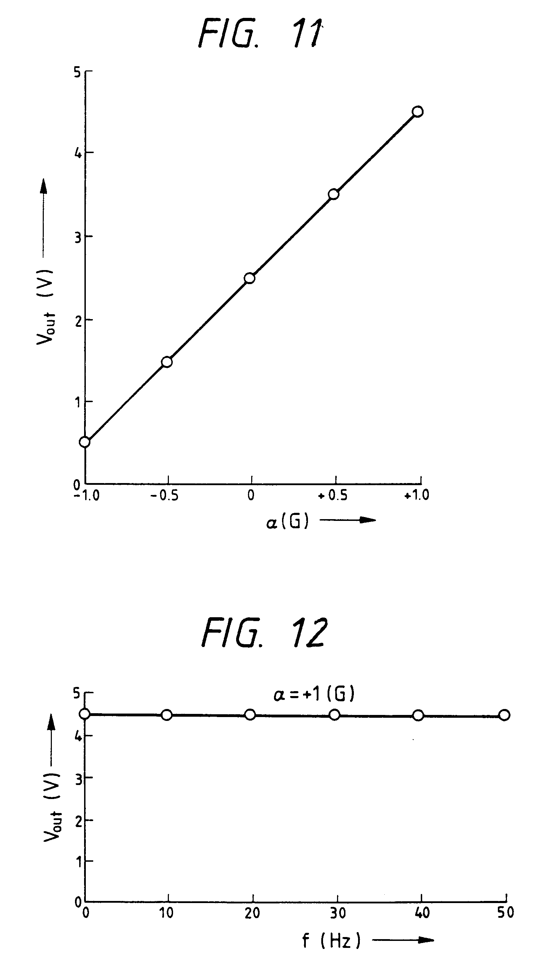

Next, Figs. 11 and 12 show the examples of the output characteristics of the prototype accelerometer measured by use of this circuit. Fig. 11 shows static characteristics and the acceleration of form 0 to ±1(G) can be detected with high linearity. Fig. 12 shows dynamic characteristics and detection sensitivity is substantially constant between the frequency of 0 and 50(Hz).

As described above, the accelerometer in accordance with the present invention is suitable as a key sensor for controlling a car body.

In accordance with the present invention, the electrostatic servo mechanism can be operated substantially linearly with respect to the acceleration to be detected by electrostatic pulse width modulation while the movable electrode is held electrostatic servo-wise at a desired position. Accordingly, the acceleration can be detected with a high level of accuracy without the need for a linearization compensation circuit.

## Claims

1. An accelerometer having a movable electrode (2) which is movable in dependence upon acceleration, a fixed electrode (3, 4) opposite to the movable electrode and separated therefrom by a gap, a circuit (25) which measures a capacitance between the movable and fixed electrode which depends on the gap and generates voltage signal having a voltage (V*) dependent upon the capacitance, and means for obtaining a voltage difference between the voltage (V*) and a predetermined voltage (Vref), feedback means (29) for feeding back an electrostatic force between the fixed and movable electrode so that the gap width is held predeterminedly constant, characterised in that said movable electrode is supported by a cantilever (1), and further characterised by a pulse width modulation means (28) for generating pulses, wherein a pulse width of the pulses is modulated according to said voltage difference, said feedback means (29) feeding back the pulses generated by the pulse width modulation means between the movable electrode and the fixed electrode (3, 4) and wherein said electrostatic force is proportional to the pulse width of the pulses generated from the pulse modulation means (28), and an output means for generating an output voltage (Vout) which is proportional to the pulse width as a signal indicative of the acceleration based on said voltage difference.

2. An accelerometer as claimed in claim 1 wherein said output means is arranged to generate the output voltage (Vout) which is an integrated signal of said voltage difference.

3. An accelerometer as claimed in claim 1 or 2 wherein a second fixed electrode (4) is spaced from said first electrode (3) and said movable electrode (2) is disposed therebetween so that respective capacitances are produced between the fixed electrodes and the movable electrode,
wherein the pulse width modulation means (28) produces modulation in dependence upon deviation of the gaps between the movable and fixed electrodes, and the output of the pulse width modulation means is fed back between the movable electrode (2) and one or both the fixed electrodes (3, 4).

## Patentansprüche

1. Ein Beschleunigungsmesser mit einer beweglichen Elektrode (2), die in Abhängigkeit zur Beschleunigung beweglich ist, gekennzeichnet durch eine feste Elektrode (3, 4), die sich entgegengesetzt zu der beweglichen Elektrode befindet und die von dieser durch einen Zwischenraum getrennt ist, einen Schaltkreis (25), der eine Kapazität zwischen der beweglichen und der festen Elektrode mißt, wobei die Kapazität von dem Zwischenraum abhängt und wobei der Schaltkreis abhängig von der Kapazität ein Spannungssignal mit einer Spannung (V*) erzeugt, und ferner gekennzeichnet durch eine Einrichtung zum Erzielen eines Spannungsunterschieds zwischen der Spannung (V*) und einer vorbestimmten Spannung (Vref), eine Rückkopplungseinrichtung (29) zur Rückkopplung einer elektrostatischen Kraft zwischen der festen und der beweglichen Elektrode, so daß die Zwischenraumbreite bei einem vorbestimmten konstanten Wert gehalten wird, dadurch gekennzeichnet, daß die genannte bewegliche Elektrode von einem Ausleger (1) gehalten wird, und ferner gekennzeichnet durch eine Pulsbreitenmodulationseinrichtung (28) zur Pulserzeugung, wobei eine Pulsbreite der Pulse gemäß dem Spannungsunterschied moduliert wird, dadurch gekennzeichnet, daß die genannte Rückkopplungseinrichtung (29) die von der Pulsbreitenmodulationseinrichtung erzeugten Pulse an die feste Elektrode (3, 4) rückkoppelt, und wobei die genannte elektrostatische Kraft proportional zu der Pulsbreite der Pulse ist, die durch die Pulsbreitenmodulationseinrichtung (28) erzeugt werden, und gekennzeichnet durch eine Ausgangseinrichtung zur Erzeugung einer Ausgangsspannung (Vout), die proportional zu der Pulsbreite ist, und zwar als Signal, das auf der Basis des genannten Spannungsunterschieds die Beschleunigung anzeigt.

2. Beschleunigungsmesser nach Anspruch 1, dadurch gekennzeichnet, daß die genannte Ausgangseinrichtung so eingerichtet ist, daß sie die Ausgangsspannung (Vout), die ein integriertes Signal des Spannungsunterschieds ist, erzeugt.

3. Beschleunigungsmesser nach Anspruch 1 oder 2, dadurch gekennzeichnet, daß eine zweite feste Elektrode (4) mit Zwischenabstand zu der genannten ersten Elektrode (3) angeordnet ist, und wobei sich die genannte bewegliche Elektrode (2) dazwischen befindet, so daß die entsprechenden Kapazitäten zwischen den festen Elektroden und der beweglichen Elektrode erzeugt werden, dadurch gekennzeichnet, daß die Pulsbreitenmodulationseinrichtung (28) eine Modulation erzeugt, in Abhängigkeit zu den Abweichungen der Zwischenräume zwischen der beweglichen Elektrode und den festen Elektroden, und wobei der Ausgang der Pulsbreitenmodulationseinrichtung zwischen der beweglichen Elektrode (2) und einer oder beiden festen Elektroden (3, 4) rückgekoppelt wird.

## Revendications

1. Accéléromètre comportant une électrode mobile (2), qui est déplaçable en fonction de l'accélération, une électrode fixe (3,4) située en regard de l'électrode mobile et séparée de cette dernière par un intervalle, un circuit (25) qui mesure une capacité entre l'électrode mobile et l'électrode fixe, qui dépend de l'intervalle, et produit un signal de tension possédant une tension (V*) qui dépend de la capacité, et des moyens pour obtenir une différence de tension entre la tension (V*) et une tension prédéterminée (Vref), des moyens de réaction (29) pour réaliser le renvoi de la force électrostatique entre l'électrode fixe et l'électrode mobile de manière que la largeur de l'intervalle soit maintenue à une valeur constante prédéterminée, caractérisé en ce que ladite électrode mobile est supportée par une partie en porte-à-faux (1), et en outre caractérisée par des moyens (28) de modulation d'impulsions en durée pour la production d'impulsions, et dans lequel une durée des impulsions est modulée en fonction de la différence de tension, lesdits moyens de réaction (29) renvoient les impulsions produites par les moyens de modulation d'impulsions en durée à l'électrode fixe (3,4), et ladite force électrostatique est proportionnelle à la durée des impulsions produites par les moyens de modulation d'impulsions (28), et des moyens de sortie pour produire une tension de sortie (Vout), qui est proportionnelle à la durée des impulsions, en tant que signal indicatif de l'accélération sur la base de ladite différence de tension.

2. Accéléromètre selon la revendication 1, dans lequel lesdits moyens de sortie sont agencés de manière à produire la tension de sortie (Vout), qui est un signal intégré de la différence de tension.

3. Accéléromètre selon la revendication 1 ou 2, dans lequel une seconde électrode fixe (4) est espacée de ladite première électrode (3), et ladite électrode mobile (2) est disposée entre ces électrodes de sorte que des capacités respectives sont produites entre les électrodes fixes et l'électrode mobile, les moyens de modulation d'impulsions en durée (28) produisant une modulation en fonction de la variation des intervalles entre l'électrode mobile et les électrodes fixes, et le signal de sortie des moyens de modulation d'impulsions en durée sont renvoyés entre l'électrode mobile (2) et une ou les deux électrodes fixes (3, 4).
